# EUROPEAN PATENT SPECIFICATION

(11) **EP 2 935 439 B1**
(45) Date of publication and mention of the grant of the patent: **01.11.2017**
(21) Application number: 13811338.6
(22) Date of filing: 10.12.2013
(51) Int. Cl.: C08K 5/05, C08K 5/17, C08K 5/315, C08L 95/00

(54) **BITUMEN TRANSPORT**
BITUMENTRANSPORT
TRANSPORT DE BITUME

(30) Priority: 20.12.2012 US 201261739823 P
(43) Date of publication of application: 28.10.2015
(73) Proprietor: Dow Global Technologies LLC, Midland, MI 48674 (US)
(72) Inventor: WAGNER, Nicole L., Midland, MI 48640 (US); BRENNAN, David J., Midland, MI 48640 (US); MILLER, Matthew D., Lake Jackson, TX 77566 (US); PATIL, Pramod D., Freeport, TX 77571 (US); SEN, Subrata, San Diego, CA 92129 (US); ZHOU, Zhe, Lake Jackson, TX 77566 (US)
(74) Representative: Murgitroyd & Company
(86) International application number: PCT/US2013/074025
(87) International publication number: WO 2014/099467

(56) References cited:
- US-A- 3 497 371
- US-A1- 2011 147 276
- G<A>-HOURCADE ET AL: "Study of the solubility of kerogen from oil shales (Puertollano, Spain) in supercritical toluene and methanol", FUEL, IPC SCIENCE AND TECHNOLOGY PRESS, GUILDFORD, GB, vol. 86, no. 5-6, 22 December 2006 (2006-12-22), pages 698-705, XP005813305, ISSN: 0016-2361, DOI: 10.1016/J.FUEL.2006.07.013
- J D R Thomas: "CHEMISTRY OF PEAT BITUMEN: FRACTIONATION AND INFRA-RED STUDIES", , 12 July 1962 (1962-07-12), pages 289-294, XP055099487, Retrieved from the Internet: URL:http://onlinelibrary.wiley.com/store/1 0.1002/jctb.5010120701/asset/5010120701_ft p.pdf?v=1&t=hr24nkxn&s=f3a2111a51922789476 56829acf046e4ff1694d7 [retrieved on 2014-01-30]
- ABARASI HART: "A review of technologies for transporting heavy crude oil and bitumen via pipelines", JOURNAL OF PETROLEUM EXPLORATION AND PRODUCTION TECHNOLOGY, 22 October 2013 (2013-10-22), XP055098896, ISSN: 2190-0558, DOI: 10.1007/s13202-013-0086-6
- Wainwright-Kinsella ET AL: "Pipeline Transportation of Diluted Bitumen from the Canadian Oil Sands", Website. Environment Canada, 1 January 2011 (2011-01-01), XP055099211, Retrieved from the Internet: URL:http://www.cepa.com/wp-content/uploads /2013/10/Facts-About-Pipeline-Transportati on-of-Diluted-Bitumen.pdf [retrieved on 2014-01-29]
- P Gateau ET AL: "Heavy Oil Dilution INTRODUCTION", Oil & Gas Science and Technology - Rev. IFP Oil & Gas Science and Technology - Rev. IFP, 1 January 2004 (2004-01-01), pages 503-509, XP055098597, Retrieved from the Internet: URL:http://ogst.ifpenergiesnouvelles.fr/ar ticles/ogst/pdf/2004/05/gateau_vol59n5.pdf [retrieved on 2014-01-28] cited in the application
- Warren R. True: "Orinoco Projects Choose Dilution To Move Production", , 19 October 1998 (1998-10-19), XP001526250, Retrieved from the Internet: URL:http://www.ogj.com/articles/print/volu me-96/issue-42/in-this-issue/general-inter est/orinoco-projects-choose-dilution-to-mo ve-production.html [retrieved on 2014-01-28]

## Description

### FIELD OF THE INVENTION

The present invention relates to a bitumen transport composition which reduces the amount of diluent needed to transport the bitumen through pipelines.

### BACKGROUND OF THE INVENTION

By definition, heavy oils have an API gravity of less than 20°. Extra heavy oil is defined as a dense oil with an API gravity of less than 10°. Bitumen has an API gravity of less than 10° and an extremely high viscosity. Bitumen is distinguished from extra heavy oil by the degree in which it has been degraded from the original crude oil deposits by bacteria and erosion. Often bitumen is present as a solid and does not flow at ambient temperature.

After mining and extraction of bitumen it must be transported from the producer to refineries for processing. The transportation of bitumen by pipeline requires that the viscosity be low enough so that the size of the pipeline and the pumping requirements are economically optimal. There are several methods known to one of skill in the art by which bitumen may be transported by pipeline. These methods include: heating; dilution; oil/water emulsion formation; core annular flow; and partial field upgrading. Each method has its own strengths and weaknesses.

Dilution is a conventional method that producers have used to transport bitumen. Dilution requires large quantities of diluent (e.g. natural gas condensate or naphtha) to reduce the viscosity and make the bitumen easier to pump through the pipeline. At the refinery, the diluent is typically separated from the bitumen and pumped back to the production site via separate pipelines for reuse. The continuous recycle of diluent leads to a poor quality diluent which affects the properties of the mixture of bitumen and diluent. Additionally, the diluents have become expensive and their availability is limited.

Gateau, P., "Heavy Oil Dilution", Oil & Gas Science and Technology, volume 59, pages 503-509, 2004 demonstrates that the viscosity of Venezuelan heavy crude oil is reduced when 15 weight percent of a 50/50 (by volume) mixture of 2-butanone additive and naphtha diluent is used compared to the same heavy crude oil diluted with 15 weight percent naphtha. The use of the 15 weight percent 50/50 mixture of 2-butanone and naphtha translates to approximately 8 weight percent of 2-butanone with respect to the total formulation of the Venezuelan heavy crude oil, naphtha, and 2-butanone. The advantages of reducing the amount of naphtha diluent are not realized in this example because a large amount of 2-butanone is used to replace similar amounts of the naphtha diluent. It would be more desirable to replace the naphtha diluent with smaller amounts of an additive.

Compared to heavy oils and extra heavy oils, there are fewer examples in the literature regarding methods to improve the transportation of bitumen through pipelines. US 2010/0056408 demonstrates improved flow of Canadian bitumen diluted with 25 to 30 volume percent of naphtha diluent when 0.1 to 2 volume percent of an additive formulation is included. The additive formulation consisted of 1 to 20 weight percent of a polymeric alkyl-substituted phenol formaldehyde drag reducing resin in a solvent.

There exists a need to improve the transportation options for bitumen. An improved bitumen transport composition requiring less diluent and less additives is also needed.

### SUMMARY OF THE INVENTION

The present invention is a bitumen transport composition comprising bitumen and a diluent present in an amount of from 10 weight percent to 24 weight percent or less and an additive wherein the additive is a mono-alcohol, a mono-nitrile, an amine or mixtures thereof, and wherein the additive is present in an amount of 3 weight percent or less and 500 parts per million or more.

Another embodiment of the present invention is a bitumen transport composition comprising bitumen and a diluent present in an amount 'x' percent less than the amount of diluent in a mixture of bitumen and diluent that meets pipeline specifications wherein 'x' is 10 or greater and 20 or less and an additive wherein the additive is a mono-alcohol, a mono-nitrile, an amine or mixtures thereof.

In a preferred embodiment of the present invention, the additive comprises a mono-alcohol wherein the alcohol is C1 to C12 and is branched or linear.

In a preferred embodiment of the present invention, the additive comprises a mono-nitrile wherein the nitrile is C1 to C6 and is aliphatic or aromatic with electron activating groups.

In a preferred embodiment of the present invention, the additive comprises an amine wherein the amine is C1 to C6 and is aliphatic or aromatic with electron activating groups.

In a preferred embodiment of the present invention, the additive is methanol, acetonitrile, ethanol, isopropanol, p-(N, N-dimethylamino)aniline, butanol, aniline, 2-ethylhexanol, 1-propanol, p-toluidine, hexanenitrile or mixtures thereof.

In a preferred embodiment of the present invention, the additive is present in an amount of 3 weight percent or less and 500 parts per million (ppm) or more.

Another embodiment of the present invention is a method of making a bitumen transport composition the method comprising forming a mixture comprising bitumen, a diluent present in an amount of from 10 weight percent to 24 weight percent or less and an additive wherein the additive is a mono-alcohol, a mono-nitrile, an amine or mixtures thereof, and wherein the additive is present in an amount of 3 weight percent or less and 500 parts per million or more.

Another embodiment of the present invention is a method of transporting the bitumen transport composition by way of a conduit, the method comprising: A) forming a mixture comprising bitumen, a diluent present in an amount of from 10 weight percent to 24 weight percent or less, and an additive wherein the additive is a mono-alcohol, a mono-nitrile, an amine or mixtures thereof, and wherein the additive is present in an amount of 3 weight percent or less and 500 parts per million or more and B) pumping the mixture through the conduit from a first point to a second point along the conduit.

### DETAILED DESCRIPTION OF THE INVENTION

As used herein, the following terms have the designated definitions, unless the context clearly indicates otherwise.

A bitumen transport composition of the present invention comprises bitumen, a diluent and an additive. Bitumen is a dense and extremely viscous form of petroleum that exists in oil sands.

Oil sands are loose sand or partially consolidated sandstone containing naturally occurring mixtures of sand, clay, and water, saturated with bitumen. Large reserves of bitumen are located in oil sands in Canada, Kazakhstan and Russia.

Canadian bitumen is bitumen obtained from Canada. Preferably, the bitumen used in the bitumen transport composition of the present invention is Canadian bitumen. Preferably, the bitumen used in the bitumen transport composition of the present invention is Canadian bitumen obtained from the Cold Lake, Athabasca or Peace River oil sands which are located in

The bitumen used in the bitumen transport composition has a viscosity greater than or equal to 10,000 centipoise when measured at ambient temperature. Preferably, the bitumen used in the bitumen transport composition has a viscosity of from 500,000 centipoise to 1,000,000,000 centipoise when measured at ambient temperature. Ambient temperature is a temperature that may range from 15 degrees Celsius to 28 degrees Celsius. Preferably, an ambient temperature condition is a temperature in the range from 18 degrees Celsius to 22 degrees Celsius.

Bitumen is a complex mixture of saturates, aromatics, resins and asphaltenes. The saturates are nonpolar material including linear, branched and cyclic saturated hydrocarbons. The aromatics contain one or more aromatic ring and are slightly more polarizable than the saturates. The resins and asphaltenes have polar substituents. Asphaltenes are insoluble in an excess of heptanes (or pentane) whereas the resins are miscible with heptanes (or pentane). It is well known to those skilled in the art that the amount of saturates, aromatics, resins and asphaltenes in bitumen may be measured using a Saturate, Aromatic, Resin and Asphaltene (SARA) analysis method. One skilled in the art will appreciate that the amounts of saturates, asphaltenes, resins and aromatics in bitumen is dependent on the geographical location of the bitumen and the test method used to measure the amounts of saturates, asphaltenes, resins and aromatics

The bitumen used in the bitumen transport composition of the present invention may contain water. The preferred amount of water in the bitumen used in the bitumen transport composition is less than 1 volume percent. Preferably, the amount of water in the bitumen used in the bitumen transport composition is greater than 0.001 volume percent and less than 0.9 volume percent.

Typically, in order for pipeline transportation of bitumen to be possible, diluent is added to the bitumen to prepare a mixture of bitumen and diluent. Diluents are hydrocarbon solvents or mixtures of hydrocarbon solvents which are added to the bitumen to improve the movement of the bitumen through a conduit. Hydrocarbon solvents are solvents which contain paraffinic, naphthenic and aromatic constituents in various proportions. Suitable diluents are natural gas condensate, natural gasoline, naphtha, kerosene, light crude oil, light synthetic crude oil, other light petroleum hydrocarbon fractions, and the like. Preferred diluents are natural gas condensate or naphtha. A conduit is a natural or artificial channel through which fluid is moved. A conduit may be a pipe, tube, trough, or line.

A suitable amount of diluent is added to the bitumen to prepare a mixture of bitumen and diluent that meets pipeline specifications. A mixture of bitumen and diluent that meets pipeline specifications is one in which the viscosity is 350 centistokes or less when measured at industry-defined reference temperature. The industry-defined reference temperature may range from 7 degrees Celsius to 19 degrees Celsius. A suitable amount of diluent in the mixture of bitumen and diluent that meets pipeline specifications may be from about 10 weight percent to about 50 weight percent wherein weight percent is based on the total mass of bitumen and diluent. It is desirable that the amount of diluent in the mixture of bitumen and diluent that meets pipeline specifications is as low as possible in order to reduce the volume of diluent required for the pipeline transportation. One of skill in the art should appreciate that the amount of diluent used in the mixture of bitumen and diluent that meets pipeline specifications will depend upon the location in which the bitumen is obtained. When Canadian bitumen is used, the preferred amount of diluent in the mixture of bitumen and diluent that meets pipeline specifications is 20 weight percent or greater and 26 weight percent or less. Preferably, when Canadian bitumen is used, the amount of diluent in the mixture of bitumen and diluent that meets pipeline specifications is 21 weight percent or greater and 24 weight percent or less. In particular, when Canadian bitumen is used, a useful amount of diluent in the mixture of bitumen and diluent that meets pipeline specifications is 23 weight percent.

An additive is added to the mixture of bitumen and diluent to prepare a bitumen transport composition. In the present invention, the amount of diluent in the bitumen transport composition is 'x' percent less than the amount of diluent in the mixture of bitumen and diluent that meets pipeline specifications wherein 'x' is in the range of 5 or greater and 25 or less. For example, when 'x' is equal to 10 and the amount of diluent in the mixture of bitumen and diluent that meets pipeline specifications is 20 weight percent, the amount of diluent in the bitumen transport composition is 18 weight percent. In particular, useful values for 'x' are in the range of 10 or greater and 20 or less.

The additive is a chemical compound which is added in small amounts to reduce the viscosity of the bitumen transport composition. Suitable additives include mono-alcohols, mono-nitriles, amines or mixtures thereof. A mono-alcohol is a chemical compound with a single hydroxyl group. The mono-alcohol may be C1 to C12 and may be branched or linear. Suitable mono-alcohols include, but are not necessarily limited to, methanol, ethanol, isopropanol, n-butanol, 2-ethylhexanol, and the like and mixtures thereof. A preferred mono-alcohol is methanol. A mono-nitrile is a chemical compound with a single nitrile group. The mono-nitrile may be C1 to C6 and may be aliphatic or aromatic. Suitable mono-nitriles may be selected from acetonitrile, hexanenitrile, and the like and mixtures thereof. A preferred mono-nitrile is acetonitrile. Amines may be C1 to C6 and may be aliphatic or aromatic. Examples of suitable amines are aniline, o-toluidine, m-toluidine, p-toluidine, p-(n, n-dimethylamino)aniline, and the like and mixtures thereof. In particular, aromatic mono-nitriles and aromatic amines with electron activating groups on the aromatic ring are useful. An electron activating group is an atom or functional group that donates some of its electron density into a conjugated pi system through resonance or inductive electron withdrawal. Examples of suitable electron activating groups are linear alkyls and branched alkyls.

The bitumen transport composition of the present invention may include additional components, deliberately added or otherwise, such as water, basic sediment, surfactants, detergents and drag reducing agents. Other chemicals may be added to the bitumen transport composition to stabilize the asphaltenes in the bitumen transport composition. It is well known in the art that the amount of the additional components that may be included in the bitumen transport composition will depend on the mining methods used to obtain the bitumen and the geographical region in which the bitumen is obtained.

As used herein, the term "percent reduced viscosity" is the percent in which the viscosity of the bitumen transport composition is reduced when compared to the viscosity of a control bitumen and diluent composition. A control bitumen and diluent composition is a mixture which does not contain an additive and contains the same amount of bitumen and diluent as the bitumen transport composition to which it is compared. The percent reduced viscosity is calculated as ((VisA-VisC)/VisC)x100 where VisA is the viscosity of the bitumen transport composition and VisC is the viscosity of the control bitumen and diluent composition. The additive may be present in the bitumen transport composition in an amount such that the percent reduced viscosity is five percent or greater. In another embodiment, the additive may be present in the bitumen transport composition in an amount such that the percent reduced viscosity is seven percent or greater.

Suitable amounts of an additive are based on the amount of bitumen in the bitumen transport composition and are preferably 50 parts per million or more, more preferably 100 parts per million or more, more preferably 500 parts per million or more. At the same time, the amount of additive in the bitumen transport composition is preferably 3 weight percent or less, more preferably 2 weight percent or less, more preferably 1 weight percent or less.

One skilled in the art should appreciate that optimal amount of additive will depend on the particular additive in the bitumen transport composition and the geographical location from which the bitumen is obtained. An optimal amount of additive is an amount of additive which results in the largest percent reduced viscosity.

The present invention also encompasses a method of making a bitumen transport composition the composition comprising bitumen, a diluent and an additive. The method includes mixing bitumen, the diluent and the additive wherein the additive is a mono-alcohol, a mono-nitrile, an amine or mixtures thereof.

In one embodiment of the present invention, the method of making a bitumen transport composition is: (a) adding the additive to a mixture of bitumen and the diluent to form the bitumen transport composition.

In another embodiment of the present invention, the method of making a bitumen transport composition is: (A) adding the additive to bitumen to form a mixture of the additive and bitumen; (B) adding the diluent to the mixture of the additive and bitumen to form the bitumen transport composition.

The mixtures in any of the steps (a), (A) and (B) may be mixed using any mixing method including rotor stator, high shear mixer, overhead stirrer, homogenizer, emulsifier, laboratory shaker, stir plate, high pressure reactor and the like. The shear rate of the mixing method will depend on the mixing method used and may be in the range of 10 inverse seconds to 100,000 inverse seconds. The mixtures in any of the steps (a), (A) and (B) may be mixed for at least 30 seconds to 24 hours depending on the mixing method.

The mixtures in any of the steps (a), (A) and (B) may be heated. If heated, it is preferred that the temperature of the mixtures in step (a) and step (B) is at least 5 degrees Celsius below the boiling point of the diluent. The temperature of the mixture in step (A) may be in the range of 5 degrees Celsius to 100 degrees Celsius. If the mixtures in any of the steps (a), (A) and (B) are in a high pressure reactor, the temperature of the mixtures may be in the range of 5 degrees Celsius to 100 degrees Celsius. Preferably, the temperature in any of the steps (a), (A) and (B) is at least 20 degrees Celsius.

The additive may be added in step (a) and step (A) as a neat additive. A neat additive is the additive which is not mixed with other substances. The neat additive may be a solid or a liquid. A solid neat additive is the additive which is a solid at ambient temperature. In another embodiment, the solid neat additive may be added in step (a) and step (A) as an additive solution. An additive solution is a mixture of the solid neat additive in a solvent. A solvent is a substance that is capable of dissolving or dispersing one or more of the additives. The solvent may be aqueous or organic. Preferred solvents are those which are capable of dissolving the additive. Preferred solvents for the solid neat additives are isopropanol and methanol.

The present invention also encompasses a method of transporting the bitumen transport composition by way of a conduit, the method comprising forming a mixture of bitumen, a diluent and an additive wherein the additive is a mono-alcohol, a mono-nitrile, an amine or mixtures thereof and pumping the mixture through the conduit from a first point to a second point along the conduit.

### EXAMPLES

The invention will now be described with respect to specific examples which are not intended to limit the scope of the invention in any way, but to more fully illuminate and illustrate it.

The percent reduced viscosity is measured on several bitumen transport compositions using Canadian bitumen. The amounts of saturates, asphaltenes, resins and aromatics in Canadian bitumen is measured using the ASTM D-2007 SARA analysis method. The amount of saturates for the Canadian bitumen range from 30 weight percent to 36 weight percent based on the total weight of the bitumen. The amount of asphaltenes for the Canadian bitumen range from 12 weight percent to 16 weight percent based on the total weight of the bitumen. The amount of resins for the Canadian bitumen range from 15 weight percent to 26 weight percent based on the total weight of the bitumen. The amount of aromatics for the Canadian bitumen range from 29 weight percent to 36 weight percent based on the total weight of the bitumen.

Natural gas condensate is used as the diluent. The additives are obtained from Sigma-Aldrich or Fisher Scientific.

The viscosities are measured using a Brookfield DV-I Prime viscometer with attached Small Sample Adapter (SSA, SC4-45Y) with SC4-13R sample chamber and a Brookfield TC-602 water circulating bath. Viscosities are typically determined at 20.0 degrees Celsius using spindle 31 with spindle speeds of 5, 10, 20, or 50 rotations per minute. Samples (8.3-8.4 grams) are poured into the sample chamber which is then inserted into the SSA. The spindle is placed into the sample chamber, attached to the viscometer, and turned on. The sample insulating cap (SC4-53D) is then place over the opening of the sample chamber. The sample is allowed to equilibrate to 20.0 degrees Celsius for five minutes before a viscosity reading is recorded. Samples are analyzed in triplicate (three separate viscosity samples prepared for each formulation) and the result reported as an average.

Typical sample preparation for Brookfield viscosity analysis is as follows: Canadian bitumen (400-500 grams) is heated to 100 degrees Celsius in a convection oven for 1 hour. Approximately 15-20 grams is poured into two-ounce glass jars and the weight is recorded. Natural gas condensate (3-5 grams) is added to the Canadian bitumen to make a mixture of approximately 85-90 weight percent bitumen and 10-15 weight percent natural gas condensate. The additive (5000 parts per million based on bitumen) is then added to the Canadian bitumen and natural gas condensate in the two-ounce jar. The lid is closed tightly, wrapped in electrical tape to prevent accidental opening, and placed into a plastic bag. The contents of the jars are shaken for two hours on a mechanical shaker, rotating the jar every 30 minutes to ensure optimal mixing. After shaking, the jar is uncapped and 8.3-8.4 grams of the resulting solution is poured into the viscometer sample chamber which is inserted into the small sample adapter. For example, a 15.2 weight percent mixture of bitumen and diluent with 5000 parts per million methanol used the following quantities of materials: Canadian bitumen (16.40 grams), natural gas condensate (2.94 grams), and methanol (0.0820 grams).

For each example 1 through 13 in Table 1, the viscosity of the bitumen transport composition is compared to the viscosity of the control bitumen and diluent compositions. The percent reduced viscosity is also shown. The bitumen transport compositions and the control bitumen and diluent compositions shown in Table 1 were prepared where the amount of diluent is 20 percent less than the amount of diluent in the mixture of bitumen and diluent that meets pipeline specifications. Comparative examples A, B, and C are also shown in Table 1.

The data further illustrates that the reduction in viscosity of the bitumen transport compositions is not due to simple dilution since different additives reduce the viscosity by different amounts when present at the same concentration. The data further illustrates that this is not a dilution effect because the bitumen transport compositions had percent reduced viscosities greater than the percent reduced viscosity of the composition with 5000 parts per million natural gas condensate diluent.

**Table 1**

| Example / Comparative Example | Additive | Viscosity of Control Bitumen and Diluent Composition (centipoise) | Viscosity of Bitumen Transport Composition with 5000 ppm additive (centipoise) | Average Percent Reduced Viscosity (%) |
|---|---|---|---|---|
| 1 | Methanol | 813 | 694 | 14.7 |
| 2 | Acetonitrile | 739 | 635 | 14.1 |
| 3 | Ethanol | 878 | 762 | 13.3 |
| 4 | Isopropanol | 878 | 785 | 10.6 |
| 5 | p-(N,N-dimethylamino) aniline | 840 | 752 | 10.5 |
| 6 | Butanol | 878 | 789 | 10.1 |
| 7 | Aniline | 840 | 759 | 9.6 |
| 8 | Natural Gas Condensate | 824 | 768 | 6.9 |
| 9 | 2-Ethylhexanol | 878 | 809 | 7.9 |
| 10 | 1-Propanol | 824 | 757 | 8.2 |
| 11 | p-Toluidine | 840 | 778 | 7.4 |
| 12 | Hexanenitrile | 802 | 748 | 6.7 |
| 13 | Toluene | 779 | 736 | 5.5 |
| A | Adiponitrile | 802 | 811 | -1.2 |
| B | Glycerol | 824 | 845 | -2.5 |
| C | 1,3-Propanediol | 824 | 861 | -4.5 |

## Claims

1. A bitumen transport composition comprising:
i bitumen;
ii a diluent present in an amount of from 10 weight percent to 24 weight percent, wherein the diluent is natural gas condensate;
and
iii an additive wherein the additive is a mono-alcohol, a mono-nitrile, an amine or mixtures thereof, and wherein the additive is present in an amount of 3 weight percent or less and 500 parts per million or more.

2. A bitumen transport composition as claimed in claim 1 wherein
the diluent is present in an amount 'x' percent less than the amount of diluent in a mixture of bitumen and diluent that meets pipeline specifications wherein 'x' is 10 or greater and 20 or less.

3. The bitumen transport composition of claim 1 wherein the additive comprises a mono-alcohol wherein the alcohol is C1 to C 12 and is branched or linear.

4. The bitumen transport composition of claim 1 wherein the additive comprises a mono-nitrile wherein the nitrile is C1 to C6 and is aliphatic or aromatic with electron activating groups.

5. The bitumen transport composition of claim 1 wherein the additive comprises an amine wherein the amine is C1 to C6 and is aliphatic or aromatic with electron activating groups.

6. The bitumen transport composition of claim 1 wherein the additive is methanol, acetonitrile, ethanol, isopropanol, p-(N, N-dimethylamino)aniline, butanol, aniline, 2-ethylhexanol, 1-propanol, p-toluidine, hexanenitrile or mixtures thereof.

7. A method of making a bitumen transport composition, the method comprising forming a mixture comprising:
i bitumen;
ii a diluent present in an amount of from 10 weight percent to 24 weight percent, wherein the diluent is natural gas condensate;
and
iii an additive wherein the additive is a mono-alcohol, a mono-nitrile, an amine or mixtures thereof, and wherein the additive is present in an amount of 3 weight percent or less and 500 parts per million or more.

8. The method of claim 7 wherein the additive comprises a mono-alcohol wherein the alcohol is C1 to C 12 and is branched or linear.

9. The method of claim 7 wherein the additive comprises a mono-nitrile wherein the nitrile is C1 to C6 and is aliphatic or aromatic with electron activating groups.

10. The method of claim 7 wherein the additive comprises an amine wherein the amine is C1 to C6 and is aliphatic or aromatic with electron activating groups.

11. The method of claim 7 wherein the additive is methanol, acetonitrile, ethanol, isopropanol, p-(N, N-dimethylamino)aniline, butanol, aniline, 2-ethylhexanol, 1-propanol, p-toluidine, hexanenitrile or mixtures thereof.

12. A method of transporting a bitumen transport composition by way of a conduit, the method comprising:
A forming a mixture comprising:
i bitumen;
ii a diluent present in an amount of from 10 weight percent to 24 weight percent, wherein the diluent is natural gas condensate; and
iii an additive wherein the additive is a mono-alcohol, a mono-nitrile, an amine or mixtures thereof, and wherein the additive is present in an amount of 3 weight percent or less and 500 parts per million or more,
and
B pumping the mixture through the conduit from a first point to a second point along the conduit.

## Patentansprüche

1. Eine Bitumentransportzusammensetzung, die Folgendes beinhaltet:
i Bitumen;
ii ein Verdünnungsmittel, das in einer Menge von 10 Gewichtsprozent bis 24 Gewichtsprozent vorliegt, wobei das Verdünnungsmittel Erdgaskondensat ist; und
iii ein Additiv, wobei das Additiv ein Monoalkohol, ein Mononitril, ein Amin oder Mischungen davon ist und wobei das Additiv in einer Menge von 3 Gewichtsprozent oder weniger und 500 Teilen pro Million oder mehr vorliegt.

2. Bitumentransportzusammensetzung gemäß Anspruch 1, wobei das Verdünnungsmittel in einer Menge von 'x' Prozent weniger als die Menge von Verdünnungsmittel in einer Mischung aus Bitumen und Verdünnungsmittel vorliegt, die Pipeline-Spezifikationen erfüllt, wobei 'x' 10 oder mehr und 20 oder weniger beträgt.

3. Bitumentransportzusammensetzung gemäß Anspruch 1, wobei das Additiv einen Monoalkohol beinhaltet, wobei der Alkohol C1 bis C12 ist und verzweigt oder linear ist.

4. Bitumentransportzusammensetzung gemäß Anspruch 1, wobei das Additiv ein Mononitril beinhaltet, wobei das Nitril C1 bis C6 ist und aliphatisch oder aromatisch mit elektronenaktivierenden Gruppen ist.

5. Bitumentransportzusammensetzung gemäß Anspruch 1, wobei das Additiv ein Amin beinhaltet, wobei das Amin C1 bis C6 ist und aliphatisch oder aromatisch mit elektronenaktivierenden Gruppen ist.

6. Bitumentransportzusammensetzung gemäß Anspruch 1, wobei es sich bei dem Additiv um Methanol, Acetonitril, Ethanol, Isopropanol, p-(N,N-Dimethylamino)anilin, Butanol, Anilin, 2-Ethylhexanol, 1-Propanol, p-Toluidin, Hexanitril oder Mischungen davon handelt.

7. Ein Verfahren zum Herstellen einer Bitumentransportzusammensetzung, wobei das Verfahren das Bilden einer Mischung beinhaltet, welche Folgendes beinhaltet:
i Bitumen;
ii ein Verdünnungsmittel, das in einer Menge von 10 Gewichtsprozent bis 24 Gewichtsprozent vorliegt, wobei das Verdünnungsmittel Erdgaskondensat ist; und
iii ein Additiv, wobei das Additiv ein Monoalkohol, ein Mononitril, ein Amin oder Mischungen davon ist und wobei das Additiv in einer Menge von 3 Gewichtsprozent oder weniger und 500 Teilen pro Million oder mehr vorliegt.

8. Verfahren gemäß Anspruch 7, wobei das Additiv einen Monoalkohol beinhaltet, wobei der Alkohol C1 bis C12 ist und verzweigt oder linear ist.

9. Verfahren gemäß Anspruch 7, wobei das Additiv ein Mononitril beinhaltet, wobei das Nitril C1 bis C6 ist und aliphatisch oder aromatisch mit elektronenaktivierenden Gruppen ist.

10. Verfahren gemäß Anspruch 7, wobei das Additiv ein Amin beinhaltet, wobei das Amin C1 bis C6 ist und aliphatisch oder aromatisch mit elektronenaktivierenden Gruppen ist.

11. Verfahren gemäß Anspruch 7, wobei es sich bei dem Additiv um Methanol, Acetonitril, Ethanol, Isopropanol, p-(N,N-Dimethylamino)anilin, Butanol, Anilin, 2-Ethylhexanol, 1-Propanol, p-Toluidin, Hexanitril oder Mischungen davon handelt.

12. Ein Verfahren zum Transportieren einer Bitumentransportzusammensetzung über eine Leitung, wobei das Verfahren Folgendes beinhaltet:
A Bilden einer Mischung, die Folgendes beinhaltet:
i Bitumen;
ii ein Verdünnungsmittel, das in einer Menge von 10 Gewichtsprozent bis 24 Gewichtsprozent vorliegt, wobei das Verdünnungsmittel Erdgaskondensat ist;
und
iii ein Additiv, wobei das Additiv ein Monoalkohol, ein Mononitril, ein Amin oder Mischungen davon ist und wobei das Additiv in einer Menge von 3 Gewichtsprozent oder weniger und 500 Teilen pro Million oder mehr vorliegt,
und
B Pumpen der Mischung durch die Leitung von einem ersten Punkt zu einem zweiten Punkt entlang der Leitung.

## Revendications

1. Une composition de transport de bitume comprenant :
i du bitume ;
ii un diluant présent dans une quantité allant de 10 pour cent en poids à 24 pour cent en poids, le diluant étant du condensat de gaz naturel ; et
iii un additif, l'additif étant un mono-alcool, un mono-nitrile, une amine ou des mélanges de ceux-ci, et l'additif étant présent dans une quantité valant 3 pour cent en poids ou moins et 500 parties par million ou plus.

2. Une composition de transport de bitume telle que revendiquée dans la revendication 1 dans laquelle le diluant est présent dans une quantité inférieure de « x » pour cent par rapport à la quantité de diluant dans un mélange de bitume et de diluant qui satisfait aux spécifications des pipelines dans laquelle « x » vaut 10 ou plus et 20 ou moins.

3. La composition de transport de bitume de la revendication 1 dans laquelle l'additif comprend un mono-alcool, l'alcool étant C1 à C12 et étant ramifié ou linéaire.

4. La composition de transport de bitume de la revendication 1 dans laquelle l'additif comprend un mono-nitrile, le nitrile étant C1 à C6 et étant aliphatique ou aromatique avec des groupes activateurs d'électrons.

5. La composition de transport de bitume de la revendication 1 dans laquelle l'additif comprend une amine, l'amine étant C1 à C6 et étant aliphatique ou aromatique avec des groupes activateurs d'électrons.

6. La composition de transport de bitume de la revendication 1 dans laquelle l'additif est le méthanol, l'acétonitrile, l'éthanol, l'isopropanol, la p-(N,N-diméthylamino)aniline, le butanol, l'aniline, la 2-éthylhexanol, le 1-propanol, la p-toluidine, l'hexanenitrile ou des mélanges de ceux-ci.

7. Une méthode de fabrication d'une composition de transport de bitume, la méthode comprenant la formation d'un mélange comprenant :
i du bitume ;
ii un diluant présent dans une quantité allant de 10 pour cent en poids à 24 pour cent en poids, le diluant étant du condensat de gaz naturel ; et
iii un additif, l'additif étant un mono-alcool, un mono-nitrile, une amine ou des mélanges de ceux-ci, et l'additif étant présent dans une quantité valant 3 pour cent en poids ou moins et 500 parties par million ou plus.

8. La méthode de la revendication 7 dans laquelle l'additif comprend un mono-alcool, l'alcool étant C1 à C12 et étant ramifié ou linéaire.

9. La méthode de la revendication 7 dans laquelle l'additif comprend un mono-nitrile, le nitrile étant C1 à C6 et étant aliphatique ou aromatique avec des groupes activateurs d'électrons.

10. La méthode de la revendication 7 dans laquelle l'additif comprend une amine, l'amine étant C1 à C6 et étant aliphatique ou aromatique avec des groupes activateurs d'électrons.

11. La méthode de la revendication 7 dans laquelle l'additif est le méthanol, l'acétonitrile, l'éthanol, l'isopropanol, la p-(N, N-diméthylamino)aniline, le butanol, l'aniline, le 2-éthylhexanol, le 1-propanol, la p-toluidine, l'hexanenitrile ou des mélanges de ceux-ci.

12. Une méthode de transport d'une composition de transport de bitume au moyen d'un conduit, la méthode comprenant :
A la formation d'un mélange comprenant :
i du bitume ;
ii un diluant présent dans une quantité allant de 10 pour cent en poids à 24 pour cent en poids, le diluant étant du condensat de gaz naturel ; et
iii un additif, l'additif étant un mono-alcool, un mono-nitrile, une amine ou des mélanges de ceux-ci, et l'additif étant présent dans une quantité valant 3 pour cent en poids ou moins et 500 parties par million ou plus,
et
B le pompage du mélange à travers le conduit d'un premier point à un deuxième point le long du conduit.
